# EUROPEAN PATENT APPLICATION

(11) **EP 4 692 205 A1**
(43) Date of publication of application: **11.02.2026**
(21) Application number: 24803455.5
(22) Date of filing: 02.05.2024
(51) Int. Cl.: C08L 23/00, C08L 67/04

(54) **RESIN COMPOSITION**

(30) Priority: 11.05.2023 JP 2023078761
(71) Applicant: Sumitomo Chemical Company, Limited, Tokyo 103-6020 (JP); Newlight Technologies, Inc., Huntington Beach CA 92647 (US)
(72) Inventor: CHIBA, Shunsuke, Ichihara-shi, Chiba 299-0195 (JP)
(74) Representative: Vossius & Partner Patentanwälte Rechtsanwälte mbB
(86) International application number: PCT/JP2024/016901
(87) International publication number: WO 2024/232343

(57) **Abstract**

A resin composition for a molded article to which a resin film is applied on a surface, includes an olefin-based polymer A, and a polyhydroxyalkanoate-based polymer B. A content of the olefin-based polymer A is 51 to 99.9 parts by mass and a content of the polyhydroxyalkanoate-based polymer B is 0.1 to 49 parts by mass, based on a total of 100 parts by mass of the olefin-based polymer A and the polyhydroxyalkanoate-based polymer B.

## Description

### Technical Field

The present invention relates to a resin composition.

### Background Art

Conventionally, aliphatic polyester-based films are known as a resin molded article having biodegradability.

### Citation List

### Patent Literature

[Patent Literature 1] Japanese Patent No. 3206747

### Summary of Invention

### Technical Problem

However, in conventional aliphatic polyester-based films, there is still room for improvement in the adhesion of a resin film applied to the film surface.

The present invention has been made in view of the above issues, and an object thereof is to provide a resin composition for a molded article to which a resin film is applied on a surface, the resin composition having high rigidity and excellent adhesion of the resin film to the surface of the molded article.

### Solution to Problem

[1] A resin composition for a molded article to which a resin film is applied on a surface, including an olefin-based polymer A, and a polyhydroxyalkanoate-based polymer B, in which
   a content of the olefin-based polymer A is 51 to 99.9 parts by mass and a content of the polyhydroxyalkanoate-based polymer B is 0.1 to 49 parts by mass, based on a total of 100 parts by mass of the olefin-based polymer A and the polyhydroxyalkanoate-based polymer B.
[2] The resin composition according to [1], in which the content of the olefin-based polymer A is 60.1 to 99.9 parts by mass and the content of the polyhydroxyalkanoate-based polymer B is 0.1 to 39.9 parts by mass, based on a total of 100 parts by mass of the olefin-based polymer A and the polyhydroxyalkanoate-based polymer B.
[3] The resin composition according to [1] or [2], in which the polyhydroxyalkanoate-based polymer B is a poly(3-hydroxyalkanoate)-based polymer.
[4] The resin composition according to any one of [1] to [3], in which the polymer A is a propylene-based polymer.
[5] An injection-molded article of the resin composition according to any one of [1] to [4].
[6] An extrusion-molded article of the resin composition according to any one of [1] to [4].
[7] An article including a molded article of a resin composition, and a resin film provided on a surface of the molded article of the resin composition, in which
   the molded article of the resin composition contains an olefin-based polymer A and a polyhydroxyalkanoate-based polymer B, and
   a content of the olefin-based polymer A is 51 to 99.9 parts by mass and a content of the polyhydroxyalkanoate-based polymer B is 0.1 to 49 parts by mass, based on a total of 100 parts by mass of the olefin-based polymer A and the polyhydroxyalkanoate-based polymer B.

### Advantageous Effects of Invention

According to the present invention, there is provided a resin composition for a molded article to which a resin film is applied on a surface, the resin composition having high rigidity and excellent adhesion of the resin film applied to the surface of the molded article.

### Brief Description of Drawing

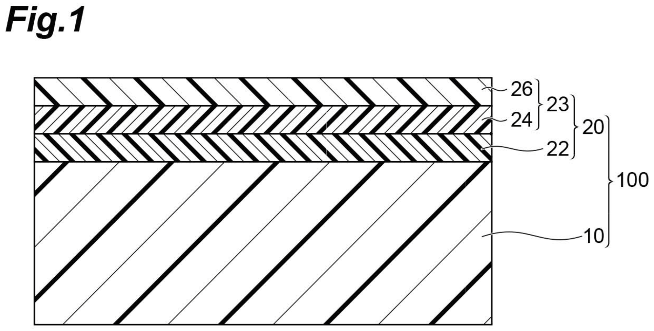

FIG. 1 is a schematic cross-sectional view of a molded article of a resin composition with a resin film in one embodiment.

### Description of Embodiments

Hereinafter, several embodiments of the present invention will be described in detail. However, the present invention is not limited to the following embodiments.

### (Resin Composition for Molded Article to which Resin Film is Applied on Surface)

The resin composition according to the present invention contains an olefin-based polymer A and a polyhydroxyalkanoate-based polymer B.

### <Olefin-based Polymer A>

The olefin-based polymer A is a polymer containing 50 mass% or more of structural units derived from an olefin having 2 to 10 carbon atoms (provided that the total amount of the olefin-based polymer is 100 mass%). Examples of olefins having 2 to 10 carbon atoms include ethylene, propylene, 1-butene, 4-methyl-1-pentene, 1-hexene, 1-octene, and 1-decene.

The olefin-based polymer A may contain structural units derived from monomers other than olefins having 2 to 10 carbon atoms. Examples of monomers other than olefins having 2 to 10 carbon atoms include aromatic vinyl monomers such as styrene; unsaturated carboxylic acids such as acrylic acid and methacrylic acid; unsaturated carboxylic acid esters such as methyl acrylate, ethyl acrylate, butyl acrylate, methyl methacrylate, and ethyl methacrylate; vinyl ester compounds such as vinyl acetate; conjugated dienes such as 1,3-butadiene and 2-methyl-1,3-butadiene (isoprene); and non-conjugated dienes such as dicyclopentadiene and 5-ethylidene-2-norbomene.

The olefin-based polymer A may be at least one selected from the group consisting of ethylene-based polymers, propylene-based polymers, and butene-based polymers, and may be a combination of any two or more thereof.

The ethylene-based polymer is a polymer containing 50 mass% or more of structural units derived from ethylene, and examples thereof include an ethylene homopolymer, an ethylene-1-butene copolymer, an ethylene-1-hexene copolymer, an ethylene-1-octene copolymer, and an ethylene-1-butene-1-hexene copolymer. The ethylene-based polymer may be a combination of two or more ethylene-based polymers.

The propylene-based polymer is a polymer containing 50 mass% or more of structural units derived from propylene, and examples thereof include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. The propylene-based polymer may be a combination of two or more propylene-based polymers. It is preferable that the olefin-based polymer A be a propylene-based polymer.

The butene-based polymer is a polymer containing 50 mass% or more of structural units derived from 1-butene, and examples thereof include a 1-butene homopolymer, a 1-butene-ethylene copolymer, a 1-butene-propylene copolymer, a 1-butene-1-hexene copolymer, a 1-butene-1-octene copolymer, a 1-butene-ethylene-propylene copolymer, a 1-butene-ethylene-1-hexene copolymer, a 1-butene-ethylene-1-octene copolymer, a 1-butene-propylene-1-hexene copolymer, and a 1-butene-propylene-1-octene copolymer. The butene-based polymer may be a combination of two or more butene-based polymers.

The above-described olefin-based polymer A can be produced by a known polymerization method using a known polymerization catalyst.

The melt mass flow rate (MFR) of the olefin-based polymer A as measured under conditions of a temperature of 230°C or 190°C and a load of 2.16 kgf in accordance with JIS K7210-2014 is preferably 0.1 g/10 min or more and 200 g/10 min or less.

### <Polyhydroxyalkanoate-based Polymer B>

The polyhydroxyalkanoate-based polymer is a polyester of hydroxyalkanoic acid. Examples of the hydroxyalkanoic acid include 2-hydroxyalkanoic acid, 3-hydroxyalkanoic acid, and 4-hydroxyalkanoic acid.

Examples of the 2-hydroxyalkanoic acid include glycolic acid, lactic acid, and 2-hydroxybutyric acid. Examples of polyesters of 2-hydroxyalkanoic acids, that is, poly(2-hydroxyalkanoate)-based polymers, include polyglycolic acid and polylactic acid.

Examples of the 3-hydroxyalkanoic acid include 3-hydroxybutyric acid, 3-hydroxypropionic acid, 3-hydroxypentanoic acid, and 3-hydroxyhexanoic acid. As for polyesters of 3-hydroxyalkanoic acids, that is, poly(3-hydroxyalkanoate)-based polymers, they will be described in detail later.

Examples of the 4-hydroxyalkanoic acid include 4-hydroxybutyric acid, 4-hydroxypentanoic acid, and 4-hydroxyhexanoic acid.

The polyhydroxyalkanoate-based polymer may be a homopolymer of a hydroxyalkanoic acid, or a polymer of two or more hydroxyalkanoic acids.

### (Poly(3-hydroxyalkanoate)-based Polymer)

The polyhydroxyalkanoate-based polymer B may be a poly(3-hydroxyalkanoate)-based polymer.

The poly(3-hydroxyalkanoate)-based polymer is a polyhydroxyalkanoate, that is, a polycondensate (polyester) of a hydroxyalkanoic acid, and necessarily contains a repeating unit of 3-hydroxyalkanoate represented by Formula (1). In Formula (1), R is a hydrogen atom, a halogen atom, an alkyl group having 1 to 15 carbon atoms, a cyano group, an amino group having 1 to 11 carbon atoms, an alkoxy group (alkyloxy group) having 1 to 11 carbon atoms, an amide group having 2 to 20 carbon atoms, an aryl group having 6 to 12 carbon atoms, or a monovalent heterocyclic group having 1 to 9 carbon atoms. These groups may have substituents. In particular, from the viewpoint of compatibility with components other than the polyhydroxyalkanoate-based polymer B contained in the composition (for example, the olefin-based polymer A), R is preferably an alkyl group having 1 to 8 carbon atoms, an amide group having 1 to 20 carbon atoms, or an aryl group having 6 to 8 carbon atoms.

[-O-CHR-CH₂-CO-] ... (1)

Examples of halogen atoms include F, Cl, Br, and I.

The alkyl group having 1 to 15 carbon atoms may be linear or branched. The number of carbon atoms in the alkyl group is preferably 1 to 8, and more preferably 1 to 4. Examples of the alkyl group include methyl, ethyl, propyl, isopropyl, butyl, isobutyl, sec-butyl, tert-butyl, pentyl, isopentyl, 2-methylbutyl, 1-methylbutyl, hexyl, isohexyl, 3-methylpentyl, 2-methylpentyl, 1-methylpentyl, heptyl, octyl, isooctyl, 2-ethylhexyl, 3,7-dimethyloctyl, nonyl, decyl, undecyl, dodecyl, tetradecyl, and pentadecyl.

Examples of amino groups having 1 to 18 carbon atoms include an amino group, an alkylamino group, a dialkylamino group, an arylamino group, an alkylarylamino group, a benzylamino group, and a dibenzylamino group.

Examples of alkylamino groups include methylamino group, ethylamino group, propylamino group, butylamino group, pentylamino group, hexylamino group, heptylamino group, octylamino group, nonylamino group, decylamino group, dodecylamino group, isopropylamino group, isobutylamino group, isopentylamino group, sec-butylamino group, tert-butylamino group, sec-pentylamino group, tert-pentylamino group, tert-octylamino group, neopentylamino group, cyclopropylamino group, cyclobutylamino group, cyclopentylamino group, cyclohexylamino group, cycloheptylamino group, cyclooctylamino group, 1-adamantylamino group, and 2-adamantylamino group.

Examples of dialkylamino groups include dimethylamino group, diethylamino group, dipropylamino group, dibutylamino group, dipentylamino group, diisopropylamino group, diisobutylamino group, diisopentylamino group, methylethylamino group, methylpropylamino group, methylbutylamino group, methylisobutylamino group, dicyclopropylamino group, pyrrolidino group, piperidino group, and piperazino group.

Examples of arylamino groups include anilino group, 1-naphthylamino group, 2-naphthylamino group, o-toluidino group, m-toluidino group, p-toluidino group, 1-fluorenamino group, 2-fluorenamino group, 2-thiazolamino group, and p-terphenylamino group.

Examples of alkylarylamino groups include N-methylanilino group, N-ethylanilino group, N-propylanilino group, N-butylanilino group, N-isopropylanilino group, and N-pentylanilino group.

Examples of alkoxy groups having 1 to 11 carbon atoms include methoxy group, ethoxy group, propoxy group, isopropoxy group, butoxy group, isobutoxy group, sec-butoxy group, tert-butoxy group, cyclopropoxy group, cyclobutoxy group, and cyclopentoxy group.

The "amide group" means a group derived from a carboxylic acid amide in which one hydrogen atom bonded to the nitrogen atom is removed. Examples of amide groups having 1 to 20 carbon atoms include groups represented by -NH-C(=O)-R^{A} (where R^{A} is a hydrogen atom or a monovalent organic group), such as formamide, acetamide, propionamide, butyramide, benzamide, trifluoroacetamide, and pentafluorobenzamide; and groups represented by -N(-C(=O)-R^{A)}(-C(=O)-R^{B}) (where R^{A} and R^{B} are each independently a hydrogen atom or a monovalent organic group), such as diformamide, diacetamide, dipropionamide, dibutyramide, dibenzamide, ditrifluoroacetamide, and dipentafluorobenzamide. The organic group may be an alkyl group, an alkoxy group, or an aryl group, which may be substituted with a halogen atom. Among these, preferred amide groups include formamide group, acetamide group, propionamide group, butyramide group, and benzamide group.

Examples of aryl groups having 6 to 12 carbon atoms include a phenyl group, a tolyl group, a xylyl group, a naphthyl group, and a biphenyl group, among which the phenyl group, tolyl group, and xylyl group are more preferable.

Examples of hetero atoms in monovalent heterocyclic groups having 1 to 9 carbon atoms include N, O, and S. The heterocyclic ring may be saturated or unsaturated, may contain a single hetero atom or multiple hetero atoms, and may include different types of hetero atoms. Examples of such heterocyclic groups include a thienyl group, a pyrrolyl group, a furyl group, a pyridyl group, a piperidinyl group, a quinolinyl group, an isoquinolinyl group, a pyrimidinyl group, a triazinyl group, and a thiazolyl group.

The repeating units of the polyhydroxyalkanoate-based polymer B may consist only of one or more types of 3-hydroxyalkanoates represented by Formula (1), or may include one or more types of 3-hydroxyalkanoates represented by Formula (1) and one or more types of other hydroxyalkanoates.

The polyhydroxyalkanoate-based polymer B preferably contains 50 mol% or more, and more preferably 70 mol% or more, of the repeating units of 3-hydroxyalkanoate represented by Formula (1), based on 100 mol% of all hydroxyalkanoate repeating units.

Examples of the 3-hydroxyalkanoate represented by Formula (1) include those in which R is a hydrogen atom or an alkyl group represented by CₙH₂ₙ₊₁, where n is an integer of 1 to 15; specifically, 3-hydroxybutyrate (which may hereinafter be referred to as 3HB) where n=1, 3-hydroxyvalerate (which may hereinafter be referred to as 3HV) where n=2, 3-hydroxyhexanoate (which may hereinafter be referred to as 3HH) where n=3, 3-hydroxyoctanoate where n=5, 3-hydroxyoctadecanoate where n=15, and 3-hydroxypropionate in which R is a hydrogen atom.

An example of the polymer B having only one type of repeating unit represented by Formula (1) is poly(3-hydroxybutyrate) (which may hereinafter be referred to as P3HB).

Examples of the polymer B having only a plurality of types of repeating units represented by Formula (1) include poly(3-hydroxybutyrate-co-3-hydroxyhexanoate) (which may hereinafter be referred to as P3HB3HH), poly(3-hydroxybutyrate-co-3-hydroxyvalerate) (which may hereinafter be referred to as P3HB3HV), and poly(3-hydroxybutyrate-co-3-hydroxypropionate) (which may hereinafter be referred to as P3HB3HP).

Examples of hydroxyalkanoates other than the 3-hydroxyalkanoate represented by Formula (1) include repeating units represented by Formula (2) (wherein R¹ represents a hydrogen atom or an alkyl group represented by CₙH₂ₙ₊₁, n is an integer of 1 to 15, and m is an integer of 2 to 10).

[-O-CHR¹-CₘH₂ₘ₊₁-CO-] ... (2)

An example of the polymer B containing the repeating units represented by Formula (1) and Formula (2) is poly(3-hydroxybutyrate-co-4-hydroxybutyrate) (for example, P3HB4HB represented by the following formula).

From the viewpoint of increasing the melting point, it is preferable that the repeating units of the polyhydroxyalkanoate-based polymer B include at least 3-hydroxybutyrate among the 3-hydroxyalkanoates represented by Formula (1).

It is preferable that the polyhydroxyalkanoate-based polymer B contain 50 mol% or more, and more preferably 70 mol% or more, of repeating units of 3-hydroxybutyrate, based on the total number of repeating units (100 mol%) of hydroxyalkanoates.

The polyhydroxyalkanoate-based polymer B may have two or more types of ester repeating units and may, for example, be a copolymer having two types of repeating units as described above, a terpolymer having three types of repeating units, or a tetrapolymer having four types of repeating units.

For example, an example of a terpolymer is poly(3-hydroxybutyrate-co-3-hydroxyvalerate-co-3-hydroxyhexanoate) (hereinafter, sometimes referred to as P3HB3HV3HH).

As described above, it is preferable that the polyhydroxyalkanoate-based polymer B contain 3-hydroxybutyrate among the repeating units of 3-hydroxyalkanoate represented by Formula (1). The proportion XX of the repeating units of 3-hydroxybutyrate, based on 100 mol of all hydroxyalkanoate ester repeating units is preferably 90 mol% or more, more preferably 95 mol% or more, and even more preferably 98.0 mol% or more.

The proportion XX is typically 100 mol% or less, preferably 99.9 mol% or less, and more preferably 99.8 mol% or less.

The arrangement mode of the copolymer may be any mode such as a random copolymer, alternating copolymer, block copolymer, or graft copolymer.

The polyhydroxyalkanoate-based polymer B may include ester repeating units other than those represented by Formulae (1) and (2), provided that the main chain of such other ester repeating units does not contain an aromatic hydrocarbon structure. That is, the polyhydroxyalkanoate-based polymer B is an aliphatic polyester. However, a group having an aromatic hydrocarbon group may be bonded to the carbon of the main chain of such other ester repeating units.

The composition ratio of the repeating units in the polyhydroxyalkanoate-based polymer B can be determined by calculation based on NMR measurement results, such as 1H-NMR or 13C-NMR, as described in L.Tripathi, M.C. Factories, 11, 44 (2012).

In addition, the polyhydroxyalkanoate-based polymer B may also be a mixture of two or more poly(3-hydroxyalkanoate)-based polymers.

The weight average molecular weight (Mw) of the polyhydroxyalkanoate-based polymer B may be from 10,000 to 1,000,000, preferably from 20,000 to 800,000, and more preferably from 30,000 to 600,000. By setting the weight average molecular weight (Mw) to 10,000 or more, it is possible to obtain a molded article excellent in impact strength and tensile elongation. In addition, by setting the weight average molecular weight to 500,000 or less, good dispersibility in the olefin-based polymer A can be achieved. The weight average molecular weight may also be 400,000 or less, 300,000 or less, 200,000 or less, or even 100,000 or less. In this specification, the weight average molecular weight (Mw) is measured by GPC, using standard polystyrene as the molecular weight standard substance.

The polyhydroxyalkanoate-based polymer B is a thermoplastic resin and may be crystalline.

According to JIS K7210-2014, the melt mass-flow rate (MFR(B)) of the polyhydroxyalkanoate-based polymer B, measured under conditions of a temperature of 190°C or 170°C and a load of 2.16 kgf, is preferably 0.1 g/10 min or more and 200 g/10 min or less. The MFR(B) may also be 1 g/10 min or more, 3 g/10 min or more, 5 g/10 min or more, 7 g/10 min or more, 8 g/10 min or more, 10 g/10 min or more, or even 20 g/10 min or more. The MFR(B) may also be 150 g/10 min or less or 100 g/10 min or less.

The melting point (Tm) of the polyhydroxyalkanoate-based polymer B is preferably 150°C or higher, and may be 155°C or higher, 160°C or higher, 165°C or higher, 170°C or higher, or even 175°C or higher. The melting point (Tm) of the polymer B may be 220°C or lower, and may also be 200°C or lower, or 190°C or lower.

The melting point (Tm) of the polyhydroxyalkanoate-based polymer B is determined based on the position of the main peak corresponding to crystal melting, as measured by differential scanning calorimetry (DSC) in accordance with JIS K 7121.

The poly(3-hydroxyalkanoate)-based polymer may be produced by microorganisms or may be derived from compounds such as cyclic lactones that are obtained from petroleum or plant-based raw materials.

The poly(3-hydroxyalkanoate)-based polymer may consist only of D-form (R-form) hydroxyalkanoate repeating units, as in the case of those produced by microorganisms, but may also consist of hydroxyalkanoate repeating units that include both D-form (R-form) and L-form (S-form), as in the case of those derived from a mixture of D-form (R-form) and L-form (S-form).

In the poly(3-hydroxyalkanoate)-based polymer produced by microorganisms, the repeating unit represented by Formula (1) can be expressed by the following formula. In Formula (BI-1), n represents the degree of polymerization.

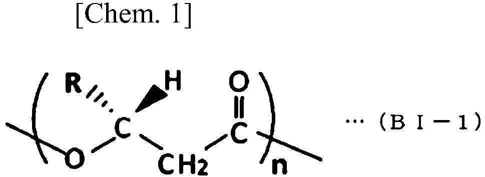

For example, poly(3-hydroxybutyrate) produced by microorganisms has the following structure. In Formula (BI-2), n represents the degree of polymerization.

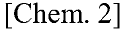

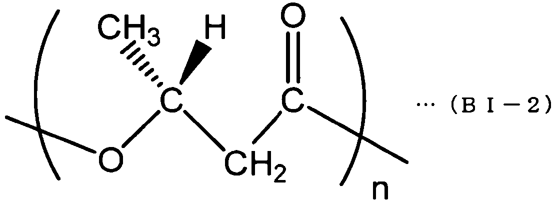

In addition, poly(3-hydroxybutyrate-co-3-hydroxyhexanoate) produced by microorganisms has the following structure. In Formula (BI-3), m and n represent the degree of polymerization.

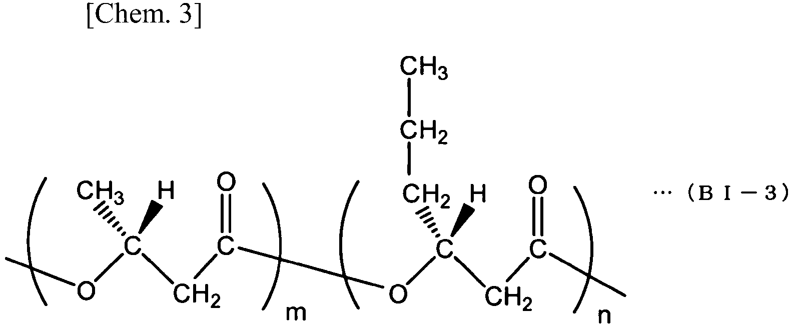

In addition, poly(3-hydroxybutyrate-co-4-hydroxybutyrate) produced by microorganisms has the following structure. In the formula (BI-4), m and n represent the degrees of polymerization.

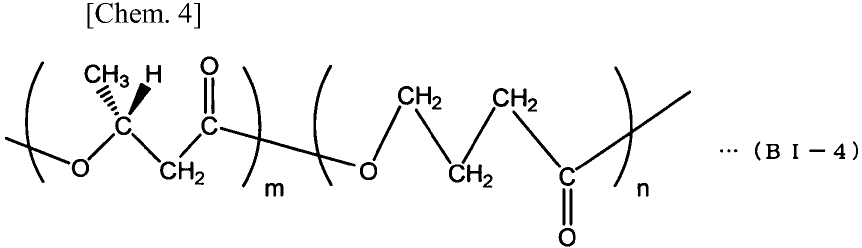

The polyhydroxyalkanoate-based polymer B may be biodegradable.

For example, a poly(3-hydroxyalkanoate)-based polymer can be produced by a strain of Alcaligenes eutrophus, designated AC32, into which a PHA synthase gene derived from Aeromonas caviae has been introduced. This strain has been internationally deposited under the Budapest Treaty with the International Patent Organism Depositary (IPOD) of the National Institute of Advanced Industrial Science and Technology (AIST) (Tsukuba Central 6, 1-1 Higashi 1-chome, Tsukuba-shi, Ibaraki, Japan). The original deposit was made on August 12, 1996, and was transferred on August 7, 1997. The accession number is FERM BP-6038 (transferred from the original deposit FERM P-15786). (See: J. Bacteriol., Vol. 179, p. 4821 (1997).)

### <Composition of Resin Composition>

The resin composition contains 51 to 99.9 parts by mass of the olefin-based polymer A and 0.1 to 49 parts by mass of the polyhydroxyalkanoate-based polymer B, based on a total of 100 parts by mass of the olefin-based polymer A and the polyhydroxyalkanoate-based polymer B.

The resin composition may contain 60.1 to 99.9 parts by mass of the olefin-based polymer A and 0.1 to 39.9 parts by mass of the polyhydroxyalkanoate-based polymer B, 70 to 99.9 parts by mass of the olefin-based polymer A and 0.1 to 30 parts by mass of the polyhydroxyalkanoate-based polymer B, and 75 to 99.9 parts by mass of the olefin-based polymer A and 0.1 to 25 parts by mass of the polyhydroxyalkanoate-based polymer B, based on a total of 100 parts by mass of the olefin-based polymer A and the polyhydroxyalkanoate-based polymer B.

The resin composition may contain 80 to 99.9 parts by mass of the olefin-based polymer A and 0.1 to 20 parts by mass of the polyhydroxyalkanoate-based polymer B, 85 to 99.9 parts by mass of the olefin-based polymer A and 0.1 to 15 parts by mass of the polyhydroxyalkanoate-based polymer B, and 90 to 99.9 parts by mass of the olefin-based polymer A and 0.1 to 10 parts by mass of the polyhydroxyalkanoate-based polymer B, based on a total of 100 parts by mass of the olefin-based polymer A and the polyhydroxyalkanoate-based polymer B.

The total content of the olefin-based polymer A and the polyhydroxyalkanoate-based polymer B in the entire resin composition may be 50% by mass or more, preferably 60% by mass or more, and more preferably 70% by mass or more.

In the resin composition, the polyhydroxyalkanoate-based polymer B may form a dispersed phase, or may not form a dispersed phase. That the polyhydroxyalkanoate-based polymer B forms a dispersed phase means that the resin composition has a sea-island structure in which the olefin-based polymer A serves as the continuous phase (sea phase) and the polyhydroxyalkanoate-based polymer B serves as the dispersed phase (island phase). The average circle-equivalent diameter of the dispersed phase (island phase) may be from 10 nm to 400 µm.

### (Additives)

The resin composition may contain additives as necessary. The additives may be at least one selected from the group consisting of stabilizers, antibacterial agents, antifungal agents, dispersants, plasticizers, flame retardants, tackifiers, colorants, metal powders, organic powders, inorganic fibers, organic fibers, composite fibers of organic and inorganic materials, inorganic whiskers, and fillers.

Examples of stabilizers include at least one selected from the group consisting of lubricants, anti-aging agents, heat stabilizers, light stabilizers, weather resistance agents, metal deactivators, ultraviolet absorbers, photostabilizers, and copper damage inhibitors. An example of a light stabilizer is a hindered amine light stabilizer.

Examples of colorants include at least one selected from the group consisting of titanium oxide, carbon black, and organic pigments. An example of a metal powder is ferrite.

Examples of organic powders include proteins. Examples of inorganic fibers include glass fibers and metal fibers. Examples of organic fibers include carbon fibers and aramid fibers. An example of an inorganic whisker includes potassium titanate whisker.

Examples of fillers include at least one selected from the group consisting of glass beads, glass balloons, glass flakes, asbestos, mica, calcium carbonate, talc, silica, calcium silicate, hydrotalcite, kaolin, diatomaceous earth, graphite, pumice, ebonite powder, cotton flock, cork powder, barium sulfate, fluororesin, cellulose powder, and wood powder.

The resin composition may contain only one of the above additives, or may contain a combination of two or more thereof.

In the resin composition, the additive may be contained in either the olefin-based polymer A or the polyhydroxyalkanoate-based polymer B. The additive may also form a separate dispersed phase from the polyhydroxyalkanoate-based polymer B within the continuous phase of the olefin-based polymer A.

### (Method for Manufacturing Resin Composition)

The resin composition can be obtained by melt-kneading the olefin-based polymer A, the polyhydroxyalkanoate-based polymer B, and optionally added additives. The kneading temperature (set temperature of the kneader) is preferably from 150 to 300°C, and more preferably from 170 to 280°C. It is also possible to obtain the composition by melt-kneading part of the olefin-based polymer A and part of the polyhydroxyalkanoate-based polymer B to obtain a preliminary kneaded product, and then further melt-kneading the remaining olefin-based polymer A and polyhydroxyalkanoate-based polymer B with the preliminary kneaded product.

### (Properties and Applications of Resin Composition)

The resin composition according to the present embodiment has high rigidity in the resulting molded article, and when a resin film is applied to the surface of the molded article after molding, it exhibits excellent adhesion between the molded article and the resin film. Although the reason is not clear, it is considered that the resin composition according to the present embodiment exhibits such properties due to the appropriate amount of the polyhydroxyalkanoate-based polymer B contained therein.

The resin composition of the present embodiment is intended for use in molded bodies to which a resin film is applied on the surface.

### (Molded Article of Resin Composition)

A molded article can be obtained using the above resin composition by a known method.

Specifically, the obtained resin composition can be molded into a molded article having a desired shape by using a known resin molding method such as an injection molding method, an extrusion molding method, a vacuum forming method, a pressure forming method, a press molding method, a foam molding method, a blow molding method, or a rotational molding method.

From the viewpoint of the adhesion of the resin film applied to the surface of the molded article, that is, paintability and printability, the molding method is preferably injection molding, extrusion molding, blow molding, or rotational molding, and more preferably injection molding or extrusion molding, by which an injection-molded article or extrusion-molded article can be obtained. According to the extrusion molding method, it is possible to form films, sheets, fibers, and the like.

From the viewpoint of adhesion of the resin film applied to the surface of the molded article, that is, in terms of paintability and printability, the maximum shear rate during thermal molding processing for obtaining the molded article of the composition of the present invention is preferably 1 to 10,000 sec⁻¹, more preferably 10 to 5,000 sec⁻¹, and even more preferably 15 to 3,000 sec⁻¹.

The above composition may also be laminated with another material such as another resin, metal, paper, or leather to obtain a multilayer structure.

The surface of the molded article of the composition of the present invention may be subjected to surface treatment. Examples of surface treatment methods include embossing, corona discharge treatment, flame treatment, plasma treatment, and ozone treatment.

The shape of the molded article of the resin composition is not particularly limited, and examples include sheets, films, fibers, fabrics, nonwoven fabrics, containers, and tubes. In addition, molded bodies having arbitrary complex shapes can be produced by injection molding or the like.

### (Article including Molded Article of Resin Composition and Resin Film)

As illustrated in FIG. 1, by applying a resin film such as a paint coating or ink printing to at least a part of the surface of the molded article of the resin composition 10, a molded article of resin composition with a resin film (article) 100 can be obtained, which includes the molded article of the resin composition 10 and a resin film 20, such as a coating film or an ink film, applied to at least a part of the surface of the molded article of the resin composition 10.
The thickness of the resin film 20 is not particularly limited, but it may be in the range of 0.01 to 100 µm.

The resin film 20 includes a film containing a resin. The resin film 20 preferably includes a primer layer 22 that is in contact with the surface of the molded article of the resin composition 10.

There is no particular limitation on the material of the primer layer 22; for example, it may include chlorinated polyolefin resins such as chlorinated polyethylene and chlorinated polypropylene, or maleated polyolefin resins obtained by modifying polyethylene resins and chlorinated polyolefin resins with maleic acid.

The resin film 20 preferably includes an overcoat layer 23 on the primer layer 22. The overcoat layer 23 may be a single layer or may have multiple layers. For example, as illustrated in FIG. 1, the overcoat layer 23 may include a base layer 24 and a clear layer 26 in this order from the side of the primer layer 22, and such a configuration of the overcoat layer may be referred to as a coating film.

There is no particular limitation on the material of the base layer 24; however, it may include, for example, resins such as ethyl methacrylate-based resin, methyl methacrylate-based resin, urethane-based resin, epoxy-based resin, ester-based resin, olefin-based resin, fluorine-based resin, silicone-based resin, styrene-based resin, and melamine-based resin; pigments such as metal particles like aluminum and mineral particles like mica, and various additives.

There is no particular limitation on the material of the clear layer 26; however, it may include, for example, resins such as ethyl methacrylate-based resin, methyl methacrylate-based resin, urethane-based resin, epoxy-based resin, ester-based resin, olefin-based resin, fluorine-based resin, silicone-based resin, styrene-based resin, and melamine-based resin, and various additives.

In order to obtain such a molded article of a resin composition with a resin film, a primer layer forming liquid (a liquid in which a primer resin is dissolved/dispersed in a solvent such as toluene or isopropyl alcohol) is applied to the surface of the above-described molded article of the resin composition and dried; next, a base layer forming coating is applied onto the primer layer and dried; and then, a clear layer forming coating is applied onto the base layer and dried, whereby the molded article of the resin composition with a resin film can be produced.

In a case where the overcoat layer 23 includes the base layer 24 and the clear layer 26, there may be a plurality of base layers 24, and there may be a plurality of clear layers 26. Additionally, the overcoat layer 23 may include only one of the base layer 24 and the clear layer 26.

The base layer 24 of the overcoat layer 23 may include a resin and a colorant selected from the group consisting of dyes and pigments, and such a base layer 24 may be referred to as an ink film. The overcoat layer 23 may include a single base layer 24 containing a resin and a colorant, or may include multiple base layers 24, and may or may not include a clear layer 26.

Examples of resins included in the base layer containing a resin and a colorant include ethyl methacrylate-based resin, methyl methacrylate-based resin, urethane-based resin, epoxy-based resin, ester-based resin, olefin-based resin, fluoro-based resin, silicone-based resin, styrene-based resin, and melamine-based resin.

Examples of dyes and pigments include carbon black, zinc white, white lead, lithopone, titanium dioxide, precipitated barium sulfate and barytes powder, red lead, red iron oxide, chrome yellow, zinc yellow type 1, zinc yellow type 2, ultramarine blue, potassium ferric ferrocyanide, YInMn blue, organic pigments, polycyclic pigments, azo pigments, lake pigments, and fluorescent pigments.

Examples of dyes include acid dyes, basic dyes, direct dyes, sulfur dyes, vat dyes, naphthol dyes, reactive dyes, and disperse dyes, which can be selected from conventionally known dyes used for color filter applications. Examples of dyes include those described in Japanese Unexamined Patent Publication No. S64-90403, Japanese Unexamined Patent Publication No. S64-91102, Japanese Unexamined Patent Publication No. H1-94301, Japanese Unexamined Patent Publication No. H6-11614, Japanese Patent No. 2592207, U.S. Patent No. 4,808,501, U.S. Patent No. 5,667,920, U.S. Patent No. 5,059,500, Japanese Unexamined Patent Publication No. H5-333207, Japanese Unexamined Patent Publication No. H6-35183, Japanese Unexamined Patent Publication No. H6-51115, and Japanese Unexamined Patent Publication No. H6-194828. Examples of chemical structures of the dyes include: pyrazole azo type, anilino azo type, aryl azo type, pyrazolotriazole azo type, pyridone azo type, triphenylmethane type, anthraquinone type, anthrapyridone type, benzylidene type, oxonol type, cyanine type, polymethine type, phenothiazine type, pyrrolopyrazole azomethine type, xanthene type, phthalocyanine type, quinophthalone type, benzopyran type, indigo type, dioxazine type, coumarin type, and squarylium type. Preferable examples include: pyrazole azo type, anilino azo type, pyrazolotriazole azo type, pyridone azo type, anthraquinone type, anthrapyridone type, phthalocyanine type, dioxazine type, quinophthalone type, and xanthene type. More preferable examples include: pyrazole azo type, pyridone azo type, phthalocyanine type, quinophthalone type, and xanthene type.

Such a resin film 20 can be obtained by applying a primer layer-forming liquid (a liquid in which a primer resin is dissolved or dispersed in a solvent such as toluene or isopropyl alcohol) to the surface of the molded article of the resin composition and drying it, and then printing and drying an ink material containing a resin, a colorant, and a solvent onto the primer layer.

There is no particular limitation on the thickness of the resin film 20, and it may be from 0.01 to 100 µm. .The thickness of the primer layer 22 may be from 0.001 to 50 µm.

### (Surface Condition of Molded Article of Resin Composition)

The molded article of the above resin composition can satisfy at least one of Requirements (i) to (vi) below.
(i): The oxygen atom content on the surface of the molded article of the resin composition, as determined by X-ray photoelectron spectroscopy, is 0.01 atom% or more and 8.5 atom% or less. The oxygen atom content may be 0.05 atom% or more, 0.10 atom% or more, or 0.20 atom% or more. The oxygen atom content may be 8.0 atom% or less, 5.0 atom% or less, 3 atom% or less, 2.0 atom% or less, or 1.0 atom% or less.
(ii): The wetting tension on the surface of the molded article of the resin composition is 25 mN/m or more and 45 mN/m or less. In the present specification, the term "wetting tension" refers to the wetting tension as defined in JIS K6768:1999. The wetting tension may be 27 mN/m or more, 29 mN/m or more, or 30 mN/m or more. The wetting tension may be 40 mN/m or less, or 37 mN/m or less.
   in a case where Requirement (i) and/or Requirement (ii) is satisfied, the oxygen atom content on the surface and/or the wetting tension of the surface is appropriate, thereby enabling even higher adhesion of the resin film applied to the surface of the molded article of the resin composition while maintaining high rigidity.

Although the reason is not clear, the following explanation is conceivable.
When the oxygen atom content on the surface is too low, the thickness of the primer layer decreases, resulting in reduced adhesion to the resin film. When the oxygen atom content on the surface is too high, the strength of the surface of the molded article of the resin composition tends to decrease.

When the wetting tension of the surface is too high, the thickness of the primer layer decreases, resulting in reduced adhesion to the resin film. When the wetting tension of the surface is too low, the uniformity of the primer layer thickness tends to decrease, leading to reduced uniformity in adhesion of the resin film.

(iii): The ratio RCO/RCH, which is the ratio of the peak intensity RCO of the stretching vibration of the C=O bond to the peak intensity RCH of the stretching vibration of the C-H bond in the infrared absorption spectrum of the surface of the molded article of the resin composition, as determined by infrared spectrophotometry, is 0.05 or more. This ratio RCO/RCH may be 0.07 or more, 0.10 or more, or 0.12 or more. There is no particular upper limit for the ratio RCO/RCH, but it may be 1.0 or less, 0.8 or less, or 0.5 or less.

The peak intensity RCO is the maximum absorbance of a peak observed in the range of 1600 to 1800 cm-1 in the IR absorption spectrum of the surface of the molded article of the resin composition, after baseline correction in the range of 1600 to 1800 cm-1, and corresponds to the stretching vibration intensity of the C=O bond in carbonyls.

The peak intensity RCH is the maximum absorbance of a peak observed in the range of 2700 to 3000 cm-1 in the IR absorption spectrum of the surface of the molded article of the resin composition, after baseline correction in the range of 2700 to 3000 cm-1, and corresponds to the stretching vibration peak intensity of the C-H bond in alkanes.

The IR spectrum of the surface of the molded article of the resin composition can be obtained using an FTIR device by the attenuated total reflection (ATR) method.

An RCO/RCH ratio of 0.05 or more indicates that C=O bonds are present on the surface of the molded article of the resin composition to a certain extent or more. It is considered that C=O bonds contribute more to adhesion with the resin film than O-H bonds, and that satisfying Formula (iii) further improves the adhesion of the resin film.

### (Applications of Article)

Examples of applications of the article of the present invention include textile materials, exterior construction materials, furniture and interior decorative components, household components, toy components, gardening components, automotive components, and packaging materials. Examples of textile materials include fabric components for clothing, fabric components for interiors, and industrial textile components, examples of exterior construction materials include carport components, fence components, gate components, gatepost components, post components, cycle port components, deck components, sunroom components, roof components, terrace components, handrail components, shade components, and awning components, examples of furniture and interior decorative components include sofa components, table components, chair components, bed components, chest components, cabinet components, and dresser components, examples of home appliance components include components for clocks, mobile phone components, and major appliance components, examples of toy components include plastic model components, diorama components, and video game console components, examples of gardening components include planter components, vase components, and flowerpot components, examples of automobile components include bumper materials, instrument panel materials, and airbag cover materials, and examples of packaging materials include packaging materials for food, packaging materials for textiles, and packaging materials for miscellaneous goods. Furthermore, other applications include, for example, monitor components, office automation (OA) equipment components, medical components, drain pans, toiletry components, bottles, containers, snow removal tool components, and various building components.

### [Examples]

Hereinafter, the present invention will be described using examples and comparative examples. The olefin-based polymer A and the polyhydroxyalkanoate-based polymer B used in the examples and comparative examples are shown below.

### (1) Olefin-based polymer A

### (A-1) Propylene Homopolymer

MFR (230°C, 2.16 kg load): 20 g/10 min
Melting point (Tm): 163°C

### (2) Polyhydroxyalkanoate-based Polymer B

### (B-1) Poly(3-hydroxybutyrate-co-3-hydroxyhexanoate)

Structural formula: Formula (BI-3)
Content of comonomer (3HH) component (mol%): 0.2 mol%
Weight average molecular weight (Mw): 104,000
MFR (190°C, 2.16 kg load): 7.8 g/10 min
Melting point (Tm): 175°C

The physical properties of each polymer and composition were measured in accordance with the methods described below.

### (1) Melt Mass Flow Rate (MFR, unit: g/10 min)

The melt mass flow rate was measured in accordance with the method specified in JIS K7210:2014. The measurement temperature was set at 230°C or 190°C, and the load was 2.16 kg.

### (2) Weight Average Molecular Weight (Mw)

The weight average molecular weight (Mw) was calculated based on the measurement results obtained by gel permeation chromatography (GPC). For the GPC measurement, a Waters GPC-150C was used as the measuring instrument, and an ortho-dichlorobenzene solution of the polymer at a concentration of 0.05 wt% was used. A mixed polystyrene gel column (PSKgel GMH6-HT, manufactured by TOSOH CORPORATION) was used as the column, and the measurement temperature was set at 135°C.

### (3) Melting Point (Tm) of Polymer

The melting point (Tm) was measured in accordance with the method specified in JIS K7121. The measurement was conducted in a temperature range of -50°C to 200°C or -50°C to 250°C, with a heating rate of 10°C/min.

### (4) Content of Comonomer Component of Polyhydroxyalkanoate-based Polymer B

The content of the comonomer component refers to the molar ratio of the other repeating units (3-hydroxyhexanoate (3HH) or 4-hydroxybutyrate (4HB)) excluding 3-hydroxybutyrate, based on the total number of ester repeating units of hydroxyalkanoate in the polymer B.

The content of the comonomer component was determined using the method employing the 1H-NMR spectrum described in L. Tripathi, M. C. Factories, 11, 44 (2012).
[Measurement Conditions] Model: Bruker AVANCE 600
Probe: 10 mm cryoprobe
Measuring temperature: 135°C
Pulse repetition time: 1 sec
Pulse width: 45°
Number of accumulations: 700 times
Magnetic field strength: 600 MHz

### (5) Measurement of Tg of Composition

A temperature-storage modulus curve of the composition was obtained using a dynamic mechanical analyzer (SII Nano Technology Inc.; DMS200), and the number of peaks was counted.

### (6) Oxygen Atomic Percentage on Surface of Molded Article of Resin Composition

The oxygen atomic percentage on the surface of the molded article of the resin composition was measured using an X-ray photoelectron spectroscopy apparatus, AXIS ULTRA DLD, manufactured by Shimadzu Corporation/KRATOS Communications Japan. The vacuum level inside the apparatus during measurement was set in the range of 10⁻⁸ to 10⁻⁹ torr. In addition, a monochromatized Al Kα (1486.6 eV) X-ray source was used as the excitation light, with an output of tube current: 10 mA and tube voltage: 15 kV, and the photoelectron take-off angle was set to 0°. After performing charge correction based on the binding energy of the carbon 1s level (1486.6 eV), the background of the spectrum was removed using the Shirley method. Using the obtained carbon 1s narrow spectrum, peak separation for the oxygen atom components was performed by applying a Gauss-Lorentz mixed function (with a Lorentzian component ratio of 30%).
[Measurement Conditions] Apparatus: X-ray photoelectron spectroscopy apparatus (AXIS ULTRA DLD manufactured by Shimadzu Corporation/KRATOS Communications Japan)
Light source: Monochromatized Al Kα (1486.6 eV)
Tube current: 10 mA
Tube voltage: 15 kV
Vacuum level inside the apparatus: 10-8 to 10-9 toor
Neutralizer gun: Used
Spot size: 300 µm × 700 µm
Scan mode (elements): Narrow (C1s, Ols, P2p)
Pass energy: 20 eV
Step: 0.1 eV
Dwell time: 260 ms (C1s), 332 (O1s), 426 (P2p)
Number of accumulations: 5 times (C1s), 10 times (O1s), 20 times (P2p)
Charge correction: Binding energy of the carbon 1s level (284.6 eV)
Background: Shirley method

### (7) Ratio RCO/RCH

Using the infrared spectrophotometer JASCO FT/IR 6200, an infrared absorption spectrum of the surface of the molded article of the resin composition was measured by the "attenuated total reflection (ATR) method" in accordance with the measurement procedure described below, and the value was obtained from the resulting IR spectrum according to Formula XXX.
[Measurement Conditions] Measurement mode: ATR method
Prism: Diamond
Measurement wavelength: 600 to 4000 cm⁻¹
Number of accumulations: 64 times
RCO/RCH = Maximum absorbance of the peak observed in the IR spectrum that has been baseline-corrected in the range of 1600 to 1800 cm⁻¹, and observed within the range of 1600 to 1800 cm⁻¹ (C=O stretching vibration intensity of carbonyl)/Maximum absorbance of the peak observed in the IR spectrum that has been baseline-corrected in the range of 2700 to 3000 cm⁻¹, and observed within the range of 2700 to 3000 cm⁻¹ (C-H stretching vibration peak intensity of alkane) ... XXX

### (9) Wetting Tension

The wetting tension was measured by dropping various wetting reagents (mixed solutions for wetting tension testing, manufactured by Wako Pure Chemical Industries, Ltd.) having different wetting tensions onto the surface of the molded article of the resin composition, spreading the wetting reagent with a cotton swab, and visually observing the spreading of the reagent. Specifically, first, the mixed solution No. 65.0 for wetting tension testing, having a wetting tension of 65 mN/m, was dropped onto the surface of the molded article and spread with a cotton swab. The condition of the reagent was visually observed 20 seconds after it had been spread. If the reagent was repelled, a wetting tension test solution with a slightly lower wetting tension was used in one-step increments, and the test was repeated using the same procedure until the reagent was no longer repelled. The wetting tension of the reagent used when it was no longer repelled was taken as the value of the wetting tension.

### (10) Initial Adhesion

### <Coating Conditions>

The initial adhesion was evaluated by spray-coating a primer (Plastic Primer (NE), manufactured by Kansai Paint Co., Ltd.) onto the surface of the molded article of the resin composition using a low-pressure spray gun (LPH101-S34, manufactured by ANEST IWATA Corporation) under conditions of an air pressure of 0.1 MPa, followed by drying at 60°C for 3 minutes to form a dry film of 6 µm. Subsequently, a water-based base coat (202 Sun Metallic, manufactured by Kansai Paint Co., Ltd.) was spray-coated using a spray gun (W101, manufactured by ANEST IWATA Corporation) under conditions of an air pressure of 0.25 MPa to form a dry film with a thickness of 10 µm, followed by drying at 60°C for 3 minutes. Thereafter, a clear coating material (including HS Clear Base main agent, HS Clear G hardener, and Thinner 30, all manufactured by Kansai Paint Co., Ltd.) was spray-coated using a spray gun (W101, manufactured by ANEST IWATA Corporation) under conditions of an air pressure of 0.15 MPa to form a dry film with a thickness of 15 µm. Thereafter, the film was dried at 60°C for 60 minutes to form a multilayer resin film.

### <Evaluation Conditions>

A grid of 100 squares (10 vertical × 10 horizontal), each 2 mm on a side, was cut into the resin film of the molded article of the resin composition on which a multilayer resin film had been formed according to the coating conditions using a razor blade. Then, a 24 mm wide cellophane tape (registered trademark, manufactured by NICHIBAN Co., Ltd.) was pressed onto the surface with a finger, and the edge of the tape was grasped and peeled off all at once. The number of squares remaining after peeling was used to calculate the retention rate (%) for evaluation.

### <Flexural Modulus>

Using an injection molding machine (PLASTAR Si30, manufactured by Toyo Machinery & Metal Co., Ltd.) with a clamping force of 30 tons, a strip-shaped injection-molded article with dimensions of 80 mm × 10 mm × 4 mm thickness was produced under the following conditions: molding temperature of 210°C, injection speed of 20 mm/sec, and mold temperature of 50°C. The flexural modulus was measured in accordance with JIS K 7203. Specifically, the flexural modulus was measured at a span length of 64 mm and a loading rate of 2.0 mm/min, with the measurement temperature set at 23°C.

### (Example 1)

5.0 mass% of the polymer (B-1) and 95 mass% of the polymer (A-1) were mixed and melt-kneaded using a 15 mm twin-screw extruder KZW15-45MG (manufactured by TECHNOVEL CORPORATION) under the following conditions: cylinder set temperature: 210°C, screw rotation speed: 500 rpm, and extrusion rate: approximately 4 kg/hour, thereby obtaining the resin composition (Q-1). The resin composition (Q-1) raw material was molded into a plate using a 220-ton injection molding machine (IS220EN, manufactured by TOSHIBA MACHINE CO., LTD.) under the following conditions: cylinder set temperature: 210°C, injection speed: 31 mm/sec, thickness: 2 mm, length: 150 mm, and width: 70 mm, thereby obtaining a molded article of a resin composition.

### (Example 2)

Except that 10 mass% of polymer (B-1) and 90 mass% of polymer (A-2) were used, the same procedure as in Example 1 was followed.

### (Comparative Example 1)

Except that only 100 mass% of polymer (A-1) was used, the same procedure as in Example 1 was followed.

### (Comparative Example 2)

The polymer (A-1) was melt-kneaded using a 15 mm twin-screw extruder KZW15-45MG (manufactured by TECHNOVEL CORPORATION) under the conditions of a cylinder set temperature of 210°C, a screw rotation speed of 500 rpm, and an extrusion rate of approximately 4 kg/hour, to obtain resin composition (Q-1). The resin composition (Q-1) raw material was molded using a 220-ton injection molding machine (IS220EN, manufactured by TOSHIBA MACHINE Co., Ltd.) under the conditions of a cylinder set temperature of 210°C, an injection speed of 31 mm/s, a thickness of 2 mm, a length of 150 mm, and a width of 70 mm, to obtain a molded article of a resin composition. The obtained molded article of the resin composition was subjected to plasma treatment using NVC-103 (manufactured by Nippo Electronics Co., Ltd.) under the conditions of an oxygen gas-containing argon gas atmosphere, 100 W, and 5 minutes.

The results are shown in Table 1.

**[Table 1]**

| Table 1 | | | Example 1 | Example 2 | Comparative Example 1 | Comparative Example 2 |
|---|---|---|---|---|---|---|
| Surface Properties of Molded Article of Resin | Surface Oxygen Atomic Percentage | atom% | 0.383 | 0.437 | 0.000 | 8.960 |
| | Wetting Tension | mN/m | 31 | 31 | 31 | 58 |
| | [C=O]/[C-H] Ratio | - | 0.149 | 0.339 | 0.002 | 0.006 |
| Compositi on | Olefin-Based Polymer A | Type | A-1 | A-1 | A-1 | A-1 |
| | | mass% | 95.0 | 90.0 | 100.0 | 100.0 |
| | Polyhydroxy alkanoate-based Polymer B | Type | B-1 | B-1 | - | - |
| | | mass% | 5.0 | 10.0 | - | - |
| Surface Treatment of Molded Article of Resin | Plasma Treatment Power | w | 0 | 0 | 0 | 100 |
| | Plasma Treatment Time | min | 0 | 0 | 0 | 5 |
| Evaluation of Molded Article of Resin | Initial Adhesion | % | 68 | 99 | 3 | 54 |
| | Flexural Modulus (FM) | MPa | 2304 | 2001 | 1858 | 1840 |

### Reference Signs List

10 Molded article of Resin composition, 20 Resin film, 22 Primer layer, 23 Overcoat layer, 24 Base layer, 26 Clear layer, 100 Molded article of Resin composition with resin film

## Claims

1. A resin composition for a molded article to which a resin film is applied on a surface, comprising:
an olefin-based polymer A; and
a polyhydroxyalkanoate-based polymer B, wherein
a content of the olefin-based polymer A is 51 to 99.9 parts by mass and a content of the polyhydroxyalkanoate-based polymer B is 0.1 to 49 parts by mass, based on a total of 100 parts by mass of the olefin-based polymer A and the polyhydroxyalkanoate-based polymer B.

2. The resin composition according to claim 1, wherein
the content of the olefin-based polymer A is 60.1 to 99.9 parts by mass and the content of the polyhydroxyalkanoate-based polymer B is 0.1 to 39.9 parts by mass, based on a total of 100 parts by mass of the olefin-based polymer A and the polyhydroxyalkanoate-based polymer B.

3. The resin composition according to claim 1 or 2, wherein the polyhydroxyalkanoate-based polymer B is a poly(3-hydroxyalkanoate)-based polymer.

4. The resin composition according to any one of claims 1 to 3, wherein the polymer A is a propylene-based polymer.

5. An injection-molded article of the resin composition according to any one of claims 1 to 4.

6. An extrusion-molded article of the resin composition according to any one of claims 1 to 4.

7. An article comprising:
a molded article of a resin composition; and
a resin film provided on a surface of the molded article of the resin composition, wherein
the molded article of the resin composition comprises an olefin-based polymer A and a polyhydroxyalkanoate-based polymer B, and
a content of the olefin-based polymer A is 51 to 99.9 parts by mass and a content of the polyhydroxyalkanoate-based polymer B is 0.1 to 49 parts by mass, based on a total of 100 parts by mass of the olefin-based polymer A and the polyhydroxyalkanoate-based polymer B.
